# EUROPEAN PATENT SPECIFICATION

(11) **EP 4 523 174 B1**
(45) Date of publication and mention of the grant of the patent: **28.10.2026**
(21) Application number: 23724825.7
(22) Date of filing: 08.05.2023
(51) Int. Cl.: G06T 7/215

(54) **SELF-SUPERVISED LEARNING OF TRAJECTORY FORECASTING MODELS**
SELBSTÜBERWACHTES LERNEN VON TRAJEKTORIENVORHERSAGEMODELLEN
APPRENTISSAGE AUTOSUPERVISÉ DE MODÈLES DE PRÉVISION DE TRAJECTOIRE

(30) Priority: 11.05.2022 GB 202206875
(43) Date of publication of application: 19.03.2025
(73) Proprietor: AUMOVIO Autonomous Mobility Germany GmbH, 85057 Ingolstadt (DE)
(72) Inventor: KRAFT, Erwin, 30175 Hannover (DE)
(74) Representative: Aumovio Corporation
(86) International application number: PCT/EP2023/062077
(87) International publication number: WO 2023/217681

(56) References cited:
- STYLES OILY ET AL: "Forecasting Pedestrian Trajectory with Machine-Annotated Training Data", 2019 IEEE INTELLIGENT VEHICLES SYMPOSIUM (IV), IEEE, 9 June 2019 (2019-06-09), pages 716 - 721, XP033606194, DOI: 10.1109/IVS.2019.8814207
- MANH HUYNH ET AL: "AOL: Adaptive Online Learning for Human Trajectory Prediction in Dynamic Video Scenes", ARXIV.ORG, CORNELL UNIVERSITY LIBRARY, 201 OLIN LIBRARY CORNELL UNIVERSITY ITHACA, NY 14853, 9 August 2020 (2020-08-09), XP081735301
- ZUANAZZI VICTOR ET AL: "Adversarial Self-Supervised Scene Flow Estimation", 2020 INTERNATIONAL CONFERENCE ON 3D VISION (3DV), IEEE, 25 November 2020 (2020-11-25), pages 1049 - 1058, XP033880227, DOI: 10.1109/3DV50981.2020.00115
- VICTOR ZUANAZZI: "Do not trust the neighbors! Adversarial Metric Learning for Self-Supervised Scene Flow Estimation", ARXIV.ORG, CORNELL UNIVERSITY LIBRARY, 201 OLIN LIBRARY CORNELL UNIVERSITY ITHACA, NY 14853, 1 November 2020 (2020-11-01), XP081815313
- NAJIBI MAHYAR ET AL: "Motion Inspired Unsupervised Perception and Prediction in Autonomous Driving", 23 October 2022, SPRINGER INTERNATIONAL PUBLISHING, PAGE(S) 424 - 443, XP047637353

## Description

Future motion trajectory forecasting is a challenging task because it involves making predictions about events that have not yet occurred. There are several factors that make this task difficult, including uncertainty, complexity, limited data, and dynamic environments.

Machine learning algorithms that are used for trajectory forecasting often rely on historical data to make forecasts or predictions. However, in many cases, the amount of data available is limited, making it difficult to train accurate models. Additionally, the environment in which motion occurs is often dynamic and can change rapidly. This can make it difficult to forecast or predict future events, as the environment may be different by the time the event occurs.

Trajectory forecasting is a crucial task in the context of autonomous driving. For instance, to avoid hazardous collisions, it is vital to forecast not only the current locations of the pedestrians in the scene but also their possible or anticipated future positions over a more extended period. However, predicting pedestrian trajectories accurately poses several challenges for autonomous driving. Pedestrians may not always comply with traffic regulations, which means they may cross the road outside designated areas, such as sidewalks, crosswalks, and traffic lights. This unpredictability in pedestrian behavior makes it more challenging to forecast their future motions accurately.

Known approaches try to solve the problem of trajectory forecasting of scene agents by using a supervised method where manually annotated video data is used for the training of machine learning models. For example, the Pedestrian Intention Estimation (PIE) dataset, which is widely used for intention prediction and trajectory forecasting, involved the laborious task of manually annotating hundreds of thousands of video frames to accurately track the movement of pedestrians. However, there is a need to lessen the dependency on video annotations, because generating them is time consuming and costly. Annotating videos is much more tedious than annotating a set of single images. To get a diverse video dataset, many different sequences must be annotated. Since each sequence usually consists of hundreds to thousands of frames (depending on the frame rate of the camera) the number of overall frames that must be labelled is usually very large. In a supervised setting, the scene agents are manually annotated, for example with bounding boxes and track identifiers.

One answer to this problem would be to rely on self-supervision to learn the prediction task using only the raw video data without using annotations. Another would be to rely on virtual driving simulations. However, models trained on simulated data often perform poorly on real world data, a well-known problem, which can perhaps be alleviated by using domain adaptation techniques.

Even though manually generated annotations are difficult to obtain, self-supervised trajectory forecasting methods have been rarely investigated in the past. A notable exception is the work of Ma et al., "AutoTrajectory: Label-free Trajectory Extraction and Prediction from Videos using Dynamic Points", ECCV, 2020. https://www.ecva.net/papers/eccv_2020/papers_ECCV/papers/123580630.pdf, who try to automatically extract the motion trajectories of pedestrians from video sequences. To detect pedestrians, they rely on optical flow segmentation (subtracting the static background) and the detection of dynamic points, which are heat-map representations of the pedestrians in the video images. These heat-maps are learned in a self-supervised way using an image reconstruction loss. Flow segmentations and heat-maps may be complementary to each other: while the motion segmentation detects moving groups of pedestrians, the heat-maps are useful to split them further into individual instances. The detected pedestrians are then tracked over the whole video sequence using a minimum-cost matching algorithm. The automatically generated trajectories may then be used to train a LSTM based prediction model.

One major drawback of this method is that it relies on static, non-moving camera views and therefore cannot be used for driving sequences.

There have been other attempts to tackle the problem of future trajectory forecasting, relying on manually annotated datasets, given that manually generating annotated video datasets can be time consuming and costly.

It is possible to predict or forecast future trajectories using a top-down view where sematic information from environment maps is leveraged (lanes, sidewalks, road structure). For example, the road structure obtained from a sematic map can be used to filter trajectory proposals. For example, one may generate proposals by fitting a distribution of 2D curves to the motion histories of the scene agents. These initial proposals are then filtered, and impossible trajectories are rejected based on the road structure. The filtered trajectories may then be passed on to a classification and refinement module to obtain a multi-modal set of 2D trajectory predictions for each agent. It is also possible to classify a set of trajectory proposals where physically impossible trajectories are rejected. One may use IMU (Inertial Measurement Unit) readings such as acceleration, speed, and steering angle, which may only be available for an ego-vehicle.

It is possible to formulate the trajectory prediction problem as a classification and refinement problem over a set of initial trajectory proposals. Such an approach has the benefit that the proposed trajectories can be filtered based on semantic information and physics-based reasoning, which makes it interpretable.

It is also possible to condition the predictions based on future trajectories proposed by a motion planning module. Prediction may be done using onboard camera views, which overcomes a drawback of using top-down views for prediction tasks that rely on accurate 3D localizations of the detected objects, since they might be difficult to obtain. For example, monocular depth estimation may pose difficulties with independently moving objects in the scene. LIDAR measurements may suffer from sparsity as only a few 3D points might be available for some objects. Solutions based on stereovision may need an additional (calibrated) camera and might produce noisy measurements for distant objects.

For example, one may estimate the distance of pedestrians based on the detections of 2D skeleton poses in monocular video images. However, monocular distance estimation is an ill-posed problem, and the obtained distances are associated with uncertainties. Since reliable 3D information might be difficult to obtain, one approach involves predicting the future positions of pedestrians and other scene agents based on onboard camera views.

The described method can be implemented with video data captured by a front-facing camera installed in a vehicle. The primary objective of the method is to forecast the future positions of the detected scene agents such as pedestrians and cars in the captured video frames. Specifically, we aim to forecast the future positions of the individual agents as they appear in the image plane.

Unlike many supervised methods that depend on labor-intensive manual annotation of video frames, our proposed approach extracts motion information from the scene flow. This process involves predicting the movement of the ego-vehicle and computing optical flow vectors for the scene agents. Naive sampling of trajectories from scene flow vectors may not provide sufficient information, as the scene agents tend to become occluded over time, rendering the sampled trajectories inaccurate. To overcome this challenge, we employ a dense tracking algorithm on the scene flow. Unlike sparse tracking algorithms that track only a small set of points or features, dense tracking algorithms estimate the motion of all pixels in the image or a dense set of pixels or patches. By using a dense tracking algorithm together with the scene flow, we can accurately track the motion of the scene agents, even when they become occluded over time. Thus, we can automatically generate a large amount of training data, which can be utilized to train motion forecasting models. This approach enables us to extract motion information from the video data without requiring manual annotation, which is labor-intensive and time-consuming. By automatically generating training data, we can improve the scalability and efficiency of our motion forecasting models, enabling them to be used in various applications.

The automatically generated trajectories are used to train a trajectory forecasting model. The trajectories may be those of pedestrians, but also bicyclists, other traffic participants, and indeed any scene agent. The more predictable the behavior of a scene agent, the more useful the training.

An advantageous embodiment trains on a large video dataset; not annotating manually allows to avoid the large costs that usually stem from annotating the video data.

It is known that an ego-motion prediction or forecast model can be trained on monocular video data. This can be done in combination with a pixel-wise depth estimation model. Training depth and ego-motion models on monocular video sequences usually requires observable motion. One may use IMU readings such as speed and acceleration to filter out stationary sequences where the ego-vehicle is not moving.

The ego-motion model takes two or more input images from the video stream and outputs a 4x4 matrix, which defines a rigid Euclidean transformation (3D rotation and 3D translation). The depth estimation model may also process multiple input images and generates a depth map where each pixel in the map corresponds to the scene depth. Both models can be trained together using a photometric loss function, which uses the alignment errors between the warped image pixels of consecutive images in the video stream. The alignment errors are minimized when the ego-motion of the vehicle is correctly described by the transformation matrix and the depth map approximates the 3D structure of the scene. The work of Godard et al. "Digging into self-supervised Monocular Depth Estimation", ICCV 2019, https://arxiv.org/pdf/1806.01260.pdf, describes such a method. However, their work focuses on the topic of monocular depth estimation. The ego-motion and photometric reconstruction are only used during training to generate a loss signal for the depth estimation model.

It is possible to further utilize the method to identify independently moving objects in the scene. These usually correspond to other traffic participants, such as cars and pedestrians. Instead of warping consecutive video frames during the model training we can apply a similar warping to optical flow vectors at inference time. Optical flow describes the 2D motion of each pixel between two consecutive video frames. The motion vectors of the static objects are caused by the ego-motion of the camera. Based on the outputs from the depth estimation and pose estimation model, it is possible to remove the ego-motion from the optical flow fields, thus only independently moving objects remain.

Models to estimate optical flow from videos may also be trained in a self-supervised way. For example, the methods proposed by Liu et al. "SelFlow: Self-Supervised Learning of Optical Flow, CVPR, 2019. https://arxiv.org/pdf/1904.09117.pdf" and "DDFlow: Learning Optical Flow with Unlabeled Data Distillation, AAAI, 2019. https://arxiv.org/pdf/1902.09145.pdf" may be utilized in our approach.

To extract motion trajectories from the ego-motion compensated optical flow fields, we may use a dense tracking algorithm to track scene agents across many frames. For example, the method described by Sundaram et al. "Dense Point Trajectories by GPU-accelerated Large Displacement Optical Flow", https://lmb.informatik.uni-freiburg.de/Publications/2010/Bro10e/sundaram_eccv10. pdf, could be utilized for this purpose. One may then use the automatically generated trajectories to train a trajectory forecasting model. Running a dense tracking method on the scene flow is helpful because the motion of objects in the scene can become occluded over time, leading to missing or corrupted data. Without tracking, the sampled motion trajectories from the scene flow may contain errors that can significantly degrade the performance of trajectory forecasting models. Therefore, dense tracking methods are essential to accurately estimate the motion of objects in the scene and generate reliable trajectory data for subsequent analysis and prediction.

The papers
STYLES OILY ET AL: "Forecasting Pedestrian Trajectory with Machine-Annotated Training Data",2019 IEEE INTELLIGENT VEHICLES SYMPOSIUM (IV), IEEE, 9 June 2019 (2019-06-09), pages 716-721,DOI: 10.1109/IVS.2019.8814207,
as well as
MANH HUYNH ET AL: "AOL: Adaptive Online Learning for Human Trajectory Prediction in Dynamic Video Scenes",ARXIV.ORG, CORNELL UNIVERSITY LIBRARY, 201 OLIN LIBRARY CORNELL UNIVERSITY ITHACA, NY 14853, 9 August 2020 (2020-08-09)
are also interesting prior art.

### Brief Description of the Figures

Figure 1 shows pedestrian trajectories;
Figure 2 shows a camera mounted behind a windshield;
Figure 3 shows steps of self-supervised data extraction; and
Figure 4 shows steps in generating forecasts.

### Description

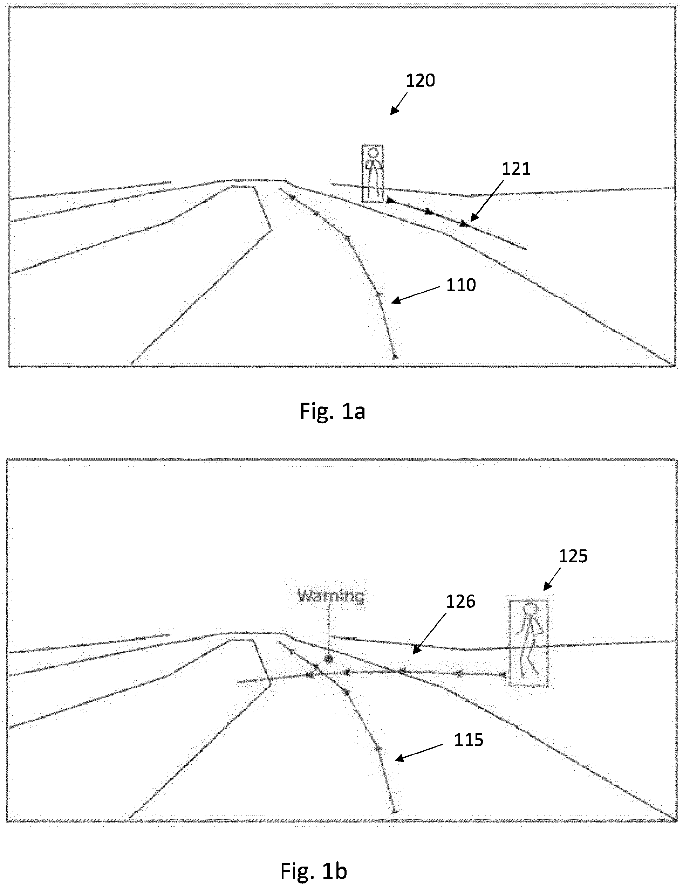

Trajectory forecasting methods try to estimate the future motion of independently moving agents, such as pedestrians and cars, in a scene such as Figures 1a and 1b. A camera mounted in a vehicle has an ego motion 110, 115, which corresponds to the trajectory of a vehicle (not shown). A pedestrian 120, 125 has a trajectory 121, 126. Trajectory 121 does not show increased risk, but trajectory 126 does, as a potential collision with the vehicle. Scene agents can be any sort of agent which moves in a way which is not directly known to the prediction system, but which does not move randomly, i.e., it must be possible to learn how the agent will behave with a certain probability or likelihood. Agents might be pedestrians, humans on bicycles, humans on other wheeled or unwheeled transport such as skateboards, or even animals,

The challenge is to extract reliable motion trajectories directly from videos without manual effort. In a supervised setting, the scene agents may be manually annotated, using e.g., bounding boxes and track identifiers. In a self-supervised setting, such manually annotated objects may or even usually do not exist.

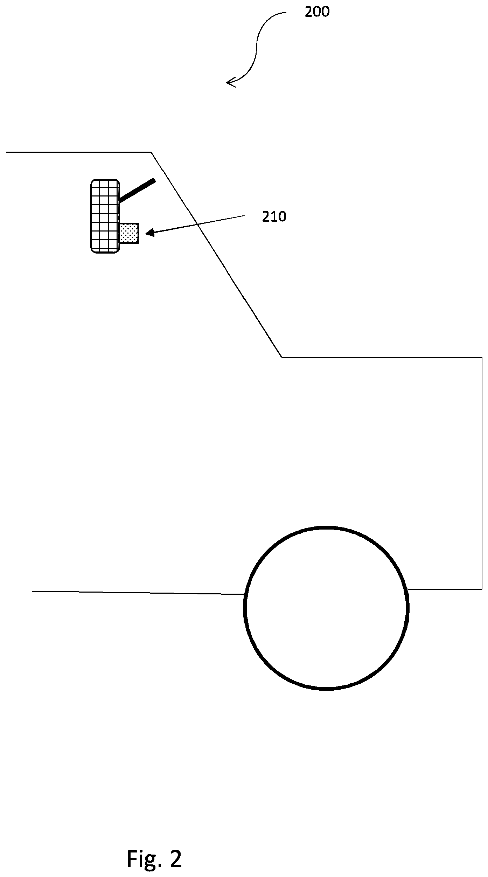

As shown in Figure 2, in embodiments, video may be provided using monocular onboard cameras 210 mounted behind the windshield of a vehicle 200. The camera must be properly calibrated, which in embodiments means the intrinsic 3x3 calibration matrix as well as camera distortion coefficients are known.

Machine learning or Artificial Intelligence (AI) can be applied to videos or image data, with a neural network being one type of machine learning model. Artificial Intelligence is widely used in various automotive applications, more specifically the Convolutional Neural Network (CNN) and the Recurrent Neural Network (RNN) are found to provide significant accuracy improvements compared to traditional algorithms for Perception and other applications. Neural networks like CNN's and RNN's have shown excellent performance at tasks like hand-written digit classification and face detection. Additionally, neural networks have also shown promise for performing well in other, more challenging, visual classification tasks. Other applications for neural networks include speech recognition, language modeling, sentiment analysis, text prediction, and others.

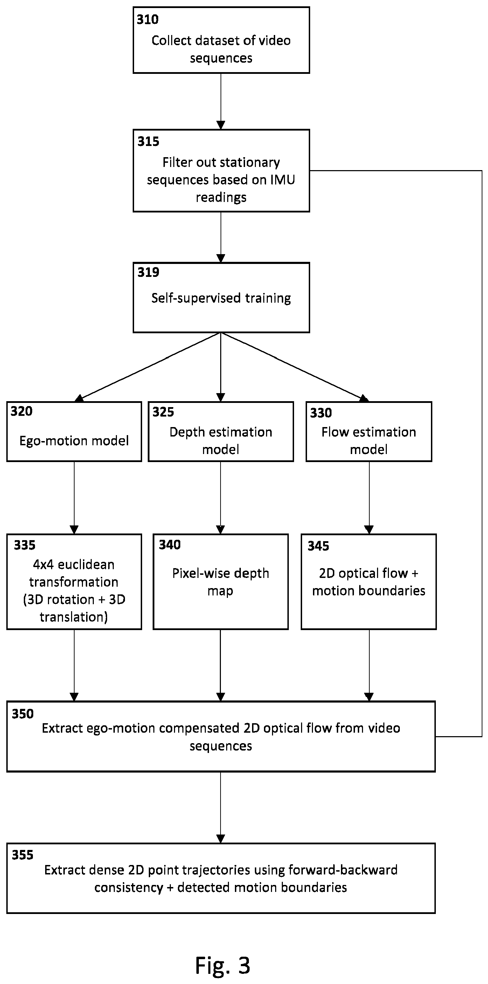

Figure 3 shows an embodiment of the steps of self-supervised extraction of motion trajectories. These steps can be used in generating a trajectory forecasting model without manual annotation. This provides a method of forecasting motion of independent agents wherein motion is forecast using a model generated with the methods described in the following.

In the first step 310, a large dataset of video sequences is collected. In embodiments this may be about 1000 hours (about 1 and a half months), covering a diverse range of different driving scenarios. In embodiments, measurements are also recorded from built-in IMUs, for example speed, yaw rates, steering angles, accelerations. These measurements are used to identify and remove sequences where the ego-vehicle is not moving (step 315). In embodiments, a dataset of ego-motion video images is extracted (315), a self-supervised ego-motion model is trained from the ego-motion video images (320), and moving objects are identified in the scene flow (350).

After the dataset has been collected at 319 for self-supervised training, in step 320 a self-supervised ego-motion estimation model is trained. A transformation matrix can be used to describe the ego-motion of the camera. This ego-motion model approach may take several input images from the video stream and output a matrix, which defines a rigid Euclidean transformation. The matrix which defines such a rigid Euclidean transformation can be a 4x4 matrix or a matrix which defines 3D rotation and 3D translation.

In embodiments, the model takes several input images from the video stream and outputs a 4x4 matrix, which defines a rigid Euclidean transformation (3D rotation and 3D translation). Together with the ego-motion model, a depth estimation model is trained in step 325. In embodiments, this model also takes several input images from the video stream and outputs a depth map. Together with the intrinsic camera matrix, ego-motion and the depth map it is possible to align consecutive frames in a video stream. A photometric loss function can be constructed, which uses the alignment errors between the warped image pixels. This can be used as a supervisory signal in the model training. The alignment error can be minimized when the ego-motion of the vehicle is correctly described by the transformation matrix and the depth map corresponds to the 3D structure of the observed scene.

In step 330 a self-supervised optical flow method is trained on the dataset and used to extract 2D optical flow fields from the video data. In step 350 the ego-motion (335), depth map (340) and optical flow (345) are used to find independently moving objects such as pedestrians and cars, and motion trajectories are automatically extracted based on the identified moving objects. This is done by removing the ego-motion from the optical flow vectors: 2D points from the image plane are back-projected into the 3D scene and then transformed using the ego-motion (335). The transformed 3D points are then projected onto the image plane again. This will remove the observable motion from the static background in the flow fields.

Thus, only the motion of independently moving agents such as objects like cars and pedestrians remains. Given the results from step 350, in embodiments a dense tracking method (355) is run on the scene flow to automatically extract motion trajectories. A dense tracking method in computer vision refers to a technique used to analyze the movement of pixels over time. Unlike feature-based tracking methods that may rely on tracking specific points or regions in the image, dense tracking methods analyze the entire image or a dense set of points in the image. Dense tracking methods typically involve computing optical flow, which is the apparent motion of pixels between consecutive frames in a video. We run the dense tracking on the camera motion compensated scene flow. Thus, we generate long-term motion trajectories that can be used in the training of trajectory forecasting models.

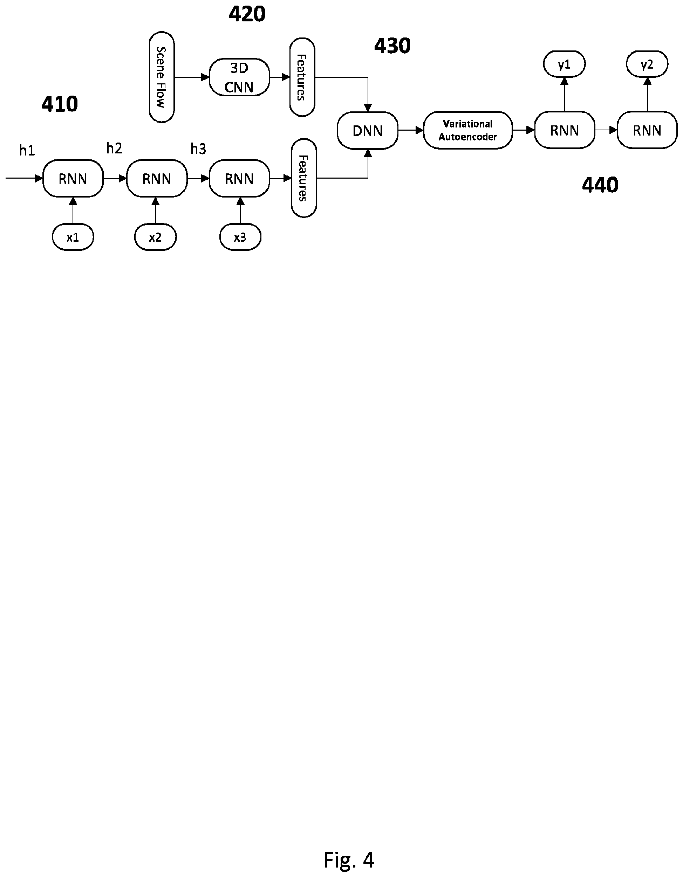

Next, a trajectory forecasting or prediction model is trained from scene flow and motion trajectories as automatically generated, and the scene flow and motion trajectories are used as ground truth data or training data. Figure 4 shows the steps of generating predictions, for example with a Trajectory Prediction forecasting module. The scene flow and motion trajectories as automatically generated are used as ground truth data or training data to train a Trajectory Prediction module. In advantageous embodiments, no manual annotations need be used to generate the ground truth. An example embodiment is built upon an encoder-decoder architecture. In another embodiment, inputs are mapped to a latent feature space.

The scene flow (420) from the past observed video frames may be encoded by a 3D convolutional neural network (or another spatio-temporal model). A motion trajectory may be encoded by an RNN (410) and mapped to an internal feature representation. The features both from the scene flow encoder (420) and trajectory encoder (410) may then further be fused together by a neural network (430) such as a dense (fully connected) neural network. In embodiments, the feature space will be used for the predictions.

The fused feature representation may then be mapped to a latent feature space using a variational autoencoder. To minimize the divergence between the present distribution and the future distribution during training, embodiments may split the training data into a "present" and a "future" set. The feature distribution of the present can be conditioned to match the distribution of the future.

At run time, embodiments may use random sampling from this feature space to generate multi-modal predictions. A Trajectory Predictor (440) will predict or forecast trajectories using the forecast model trained with the methods described above. The Trajectory Predictor may use a fused feature representation that has been mapped to a latent feature space using a variational autoencoder for prediction. In embodiments, the features will be decoded by an RNN (440) to generate future trajectory predictions or forecasts. This embodiment of a method of forecasting motion of independent agents uses a feature space generated by the methods described above to generate trajectory forecasts. In other embodiments, the Trajectory Predictor may use more than one RNN (440) to generate trajectory predictions or forecasts.

The Trajectory Predictor may be used for a vehicle or other autonomous automotive applications.

In various implementations, program instructions of a software application are used to implement the methods and/or mechanisms described herein. For example, program instructions executable by a general or special purpose processor are contemplated. In various implementations, such program instructions can be represented by a high-level programming language. In other implementations, the program instructions can be compiled from a high-level programming language to a binary, intermediate, or other form. Alternatively, program instructions can be written that describe the behavior or design of hardware. Such program instructions can be represented by a high-level programming language, such as C. Alternatively, a hardware design language (HDL) such as Verilog can be used to generate circuits and components which implement parts of the program instructions in place of or as complement to a software application. In various implementations, the program instructions are stored on any of a variety of non-transitory computer readable storage mediums. The computer-readable storage medium contains instructions, which when executed, cause execution of some or all of the steps described above. The storage medium is accessible by a computing system during use to provide the program instructions to the computing system for program execution. In embodiments, such a computing system may include one or more memories and one or more processors configured to execute program instructions.

It should be emphasized that the above-described implementations are only non-limiting examples of implementations. Numerous variations and modifications will become apparent to those skilled in the art once the above disclosure is fully appreciated. It is intended that the following claims be interpreted to embrace all such variations and modifications.

## Claims

1. A method of generating a future motion forecast model without manual annotation wherein a dataset of video images showing motion is collected (310), a dataset of ego-motion video images is extracted (315), a self-supervised ego-motion model is trained from the ego-motion video images (320), moving agents are identified in a scene flow (350) without supervision, motion trajectories are automatically extracted based on the identified moving agents, and the motion trajectories are used to generate a future motion forecast model.

2. The method of claim one where motion trajectories are extracted using dense tracking.

3. The method of a previous claim wherein a transformation matrix is used to describe the ego-motion of the camera.

4. The method of a previous claim wherein a photometric loss function described by the alignment errors between warped image pixels is used as a supervisory signal in the model training,

5. The method of a previous claim wherein the ego-motion model takes several input images from a video stream and outputs a matrix, which defines a rigid Euclidean transformation.

6. The method of claim 5 wherein the matrix which defines a rigid Euclidean transformation is a 4x4 matrix or a matrix which defines 3D rotation and 3D translation.

7. The method of a previous claim wherein a trajectory prediction model is trained from scene flow and motion trajectories as automatically generated and the scene flow and motion trajectories are used as ground truth or training data.

8. The method of a previous claim wherein ego-motion (335), a depth map (340) and optical flow (345) are used to find independently moving objects.

9. The method of a previous claim wherein training data is split into a "present" and a "future" set.

10. The method of a previous claim wherein the feature space used for the predictions comprises output of a scene flow encoder (420) and a trajectory encoder (410) fused with a Neural Network (430).

11. The method of a previous claim wherein the feature space is conditioned by a variational autoencoder, and random sampling from the feature space is used to generate multi-modal predictions.

12. A Trajectory Predictor (440) operable to forecast trajectories using a forecast model trained with the method of any of the previous claims.

13. The Trajectory Predictor of claim 12 wherein a fused feature representation used for prediction has been mapped to a latent feature space using a variational autoencoder.

14. The Trajectory Predictor of claims 12 or 13, which comprises at least one RNN (440) configured to decode features from a feature space to generate trajectory forecasts.

15. A method of forecasting motion of independent agents wherein motion is forecast using a forecast model generated with the methods of claims 1 to 11.

16. The method of forecasting motion of independent agents of claim 15 wherein a feature space generated by the method of any of claims 1 to 11 is used by an RNN (440) to generate trajectory predictions.

17. A computer-readable storage medium containing instructions, which when executed, cause execution of the steps of any of claims 1 to 11.

18. A vehicle which comprises a Trajectory Predictor according to any of the claims 12 to 14.

## Patentansprüche

1. Verfahren zum Erzeugen eines Vorhersagemodells für zukünftige Bewegungen ohne manuelle Annotation, wobei ein Datensatz von Bewegungen zeigenden Videobildern gesammelt wird (310), ein Datensatz von Ego-Bewegungs-Videobildern extrahiert wird (315), ein selbstüberwachtes Ego-Bewegungsmodell anhand der Ego-Bewegungs-Videobilder trainiert wird (320), sich bewegende Agenten in einem Szenenfluss ohne Überwachung erkannt werden (350), Bewegungstrajektorien automatisch basierend auf den erkannten sich bewegenden Agenten extrahiert werden und die Bewegungstrajektorien zum Erzeugen eines Vorhersagemodells für zukünftige Bewegungen verwendet werden.

2. Verfahren nach Anspruch 1, wobei Bewegungstrajektorien unter Verwendung von dichter Verfolgung extrahiert werden.

3. Verfahren nach einem der vorhergehenden Ansprüche, wobei zum Beschreiben der Ego-Bewegungen der Kamera eine Transformationsmatrix verwendet wird.

4. Verfahren nach einem der vorhergehenden Ansprüche, wobei eine durch die Ausrichtungsfehler zwischen Pixeln verzerrter Bilder beschriebene fotometrische Verlustfunktion als Überwachungssignal beim Modelltraining verwendet wird,

5. Verfahren nach einem der vorhergehenden Ansprüche, wobei das Ego-Bewegungsmodell mehrere Eingangsbilder aus einem Videostream aufnimmt und eine Matrix ausgibt, die eine starre euklidische Transformation definiert.

6. Verfahren nach Anspruch 5, wobei die eine starre euklidische Transformation definierende Matrix eine 4x4-Matrix oder eine Matrix ist, die 3D-Rotation und 3D-Translation definiert.

7. Verfahren nach einem der vorhergehenden Ansprüche, wobei ein Trajektorienvorhersagemodell anhand von automatisch erzeugten Szenenfluss- und Bewegungstrajektorien trainiert wird und die Szenenfluss- und Bewegungstrajektorien als Ground-Truth- oder Trainingsdaten verwendet werden.

8. Verfahren nach einem der vorhergehenden Ansprüche, wobei Ego-Bewegungen (335), eine Tiefenkarte (340) und Lichtfluss (345) zum Finden sich unabhängig bewegender Objekte verwendet werden.

9. Verfahren nach einem der vorhergehenden Ansprüche, wobei Trainingsdaten in einen "gegenwärtigen" und einen "zukünftigen" Datensatz aufgeteilt werden.

10. Verfahren nach einem der vorhergehenden Ansprüche, wobei der für die Vorhersagen verwendete Merkmalsraum Ausgaben eines Szenenfluss-Encoders (420) und eines Trajektorien-Encoders (410) umfasst, die mit einem neuronalen Netz (430) fusioniert sind.

11. Verfahren nach einem der vorhergehenden Ansprüche, wobei der Merkmalsraum durch einen Variations-Autoencoder konditioniert wird und eine zufällige Stichprobe aus dem Merkmalsraum zum Erzeugen multimodaler Vorhersagen verwendet wird.

12. Trajektorienprädiktor (440), der zum Vorhersagen von Trajektorien unter Verwendung eines mit dem Verfahren nach einem der vorhergehenden Ansprüche trainierten Vorhersagemodells betreibbar ist.

13. Trajektorienprädiktor nach Anspruch 12, wobei eine zur Vorhersage verwendete fusionierte Merkmalsdarstellung unter Verwendung eines Variations-Autoencoders auf einen latenten Merkmalsraum abgebildet ist.

14. Trajektorienprädiktor nach Anspruch 12 oder 13, der mindestens ein RNN (440) umfasst, das zum Decodieren von Merkmalen aus einem Merkmalsraum zum Erzeugen von Trajektorienvorhersagen konfiguriert ist.

15. Verfahren zum Vorhersagen von Bewegungen unabhängiger Agenten, wobei Bewegungen unter Verwendung eines mit den Verfahren nach Anspruch 1 bis 11 erzeugten Vorhersagemodells vorhergesagt werden.

16. Verfahren zum Vorhersagen von Bewegungen unabhängiger Agenten nach Anspruch 15, wobei ein durch das Verfahren nach einem der Ansprüche 1 bis 11 erzeugter Merkmalsraum von einem RNN (440) zum Erzeugen von Trajektorienvorhersagen verwendet wird.

17. Computerlesbares Speichermedium, enthaltend Anweisungen, die beim Ausführen eine Ausführung der Schritte nach einem der Ansprüche 1 bis 11 veranlassen.

18. Fahrzeug, umfassend einen Trajektorienprädiktor nach einem der Ansprüche 12 bis 14.

## Revendications

1. Procédé de génération d'un modèle de prévision de mouvement futur sans annotation manuelle, dans lequel un ensemble de données d'images vidéo montrant du mouvement est collecté (310), un ensemble de données d'images vidéo d'égo-mouvement est extrait (315), un modèle d'égo-mouvement autosupervisé est entraîné à partir des images vidéo d'égo-mouvement (320), des agents en mouvement sont identifiés dans un flux de scène (350) sans supervision, des trajectoires de mouvement sont extraites automatiquement sur la base des agents en mouvement identifiés, et les trajectoires de mouvement sont utilisées pour générer un modèle de prévision de mouvement futur.

2. Procédé selon la première revendication, dans lequel les trajectoires de mouvement sont extraites à l'aide d'un suivi dense.

3. Procédé selon une revendication précédente, dans lequel une matrice de transformation est utilisée pour décrire l'égo-mouvement de la caméra.

4. Procédé selon une revendication précédente, dans lequel une fonction de perte photométrique décrite par les erreurs d'alignement entre les pixels d'une image déformée est utilisée comme signal de supervision dans l'apprentissage de modèle.

5. Procédé selon une revendication précédente, dans lequel le modèle d'égo-mouvement prend plusieurs images d'entrée d'un flux vidéo et produit une matrice qui définit une transformation euclidienne rigide.

6. Procédé selon la revendication 5, dans lequel la matrice qui définit une transformation euclidienne rigide est une matrice 4x4 ou une matrice qui définit une rotation 3D et une translation 3D.

7. Procédé selon une revendication précédente, dans lequel un modèle de prédiction de trajectoire est entraîné à partir d'un flux de scène et de trajectoires de mouvement tels que générés automatiquement, et le flux de scène et les trajectoires de mouvement sont utilisés comme vérité terrain ou données d'entraînement.

8. Procédé selon une revendication précédente, dans lequel l'égo-mouvement (335), une carte de profondeur (340) et le flux optique (345) sont utilisés pour trouver des objets se déplaçant indépendamment.

9. Procédé selon une revendication précédente, dans lequel les données d'entraînement sont divisées en un ensemble « présent » et un ensemble « futur ».

10. Procédé selon une revendication précédente, dans lequel l'espace de caractéristiques utilisé pour les prédictions comprend la sortie d'un encodeur de flux de scène (420) et d'un encodeur de trajectoire (410) fusionnés avec un réseau neuronal (430).

11. Procédé selon une revendication précédente, dans lequel l'espace de caractéristiques est conditionné par un auto-encodeur variationnel, et un échantillonnage aléatoire de l'espace de caractéristiques est utilisé pour générer des prédictions multimodales.

12. Prédicteur de trajectoire (440) pouvant fonctionner pour prévoir des trajectoires à l'aide d'un modèle de prévision entraîné avec le procédé selon l'une quelconque des revendications précédentes.

13. Prédicteur de trajectoire selon la revendication 12 dans lequel une représentation de caractéristiques fusionnées utilisée pour la prédiction a été mappée sur un espace de caractéristiques latent à l'aide d'un auto-encodeur variationnel.

14. Prédicteur de trajectoire selon les revendications 12 ou 13, qui comprend au moins un RNN (440) configuré pour décoder des caractéristiques d'un espace de caractéristiques afin de générer des prévisions de trajectoire.

15. Procédé de prévision du mouvement d'agents indépendants, dans lequel le mouvement est prévu à l'aide d'un modèle de prévision généré avec les procédés selon les revendications 1 à 11.

16. Procédé de prévision du mouvement d'agents indépendants selon la revendication 15, dans lequel un espace de caractéristiques généré par le procédé selon l'une quelconque des revendications 1 à 11 est utilisé par un RNN (440) pour générer des prédictions de trajectoire.

17. Support de stockage lisible par ordinateur contenant des instructions qui, lorsqu'elles sont exécutées, entraînent l'exécution des étapes selon l'une quelconque des revendications 1 à 11.

18. Véhicule qui comprend un prédicteur de trajectoire selon l'une quelconque des revendications 12 à 14.
